# EUROPÄISCHE PATENTSCHRIFT

(11) **EP 0 523 559 B1**
(45) Veröffentlichungstag und Bekanntmachung des Hinweises auf die Patenterteilung: **26.04.1995**
(21) Anmeldenummer: 92111755.2
(22) Anmeldetag: 10.07.1992
(51) Int. Cl.: F02K 1/80

(54) **Absperrdichtung**
Sealing device
Joint d'étanchéité

(30) Priorität: 13.07.1991 DE 4123303
(43) Veröffentlichungstag der Anmeldung: 20.01.1993
(73) Patentinhaber: MTU MOTOREN- UND TURBINEN-UNION MÜNCHEN GMBH, D-80976 München (DE)
(72) Erfinder: Enderle, Heinrich, W-8038 Gröbenzell (DE); Ottenstein, Achim, W-8031 Eichenau (DE)

(56) Entgegenhaltungen:
- EP-A- 0 284 539
- GB-A- 2 078 306
- US-A- 4 093 157
- US-A- 4 110 972
- US-A- 5 014 917

## Beschreibung

Die Erfindung bezieht sich auf eine Absperrdichtung nach dem Oberbegriff des Patentanspruchs 1.

Z.B. bei kombiniertem Turbo-Staustrahltriebwerken ist es erforderlich, gegenüber stationären Wandteilen verfahrbare oder verschwenkbare Absperrmittel, wie Klappen, vorzusehen und diese entlang der betreffenden Bewegungsebene zuverlässig und möglichst verschleißarm abzudichten; die Abdichtung erfolgt dabei gegenüber oftmals extrem unterschiedlich druckbeaufschlagten Räumen; Aufgabe der genannten Absperrmittel ist es u.a., beim beispielhaft genannten Triebwerkstyp das abgeschaltete Turbotriebwerk einwandfrei frontseitig (Verdichter) und heckseitig (Turbine) gegenüber Staudruckluft, bei eingeschaltetem Staustrahltriebwerk, abzusperren. Umgekehrt, können genannte Absperrmittel verwendet werden, um bei stillgesetztem Staustrahlantrieb und eingeschaltetem Turbo-Triebwerk eine ausschließliche Ansaugluftversorgung des Turbo-Triebwerks bei gleichzeitig freigelegtem Abgasaustritt (Turbine) in ein Strahlrohr mit Schubdüse zu gewährleisten.

Ferner sind beim beispielhaft genannten Triebwerkstyp die klappenartigen Absperrorgane im Staustrahlbetrieb gegenüber der zugeführten Stau-Druckluft äußerst hohen Temperaturen von etwa 1700K oder gar darüber ausgesetzt; die klappenartigen Absperrorgane müssen deshalb im Betrieb gekühlt werden und -gegebenenfalls zusätzlich dazu - aus hoch-temperaturbeständigen Werkstoffen gefertigt werden. Die erwähnten Temperaturen müssen auch von den schon genannten Klappen-Dichtungen zuverlässig beherrscht werden.

Die genannte dichtungsseitige Temperaturbeherrschung wie aber auch die genannten Anforderungen an eine für verhältnismäßig zeitlich lange Betriebsdauer einwandfreie Abdichtung gelten sinngemäß auch für Schubdüsenklappen beim beispielhaft erwähnten Triebwerkstyp; bzw. bei Flugtriebwerken aller Art, also z.B. für sich in einem rechteckigen oder quadratischen Düsengehäuse einander gegenüberliegende Primär- und und Sekundärklappen, die insbesondere bei Nachbrenner- und Staustrahlbetrieb extrem hohen Temperaturen ausgesetzt sind; dabei müssen die Klappen über einen extrem großen Verstellbereich (Bodenstartfall bis zum Hyperschallflug-Betrieb) eine zuverlässige Abdichtung zwischen der Heißgasseite (Düse, innen) und der äußeren Umgebung (Atmosphäre) bzw. Druckausgleichs-Kammern, gewährleisten, die außen zwischen den Klappen und der Umwandung des Düsengehäuses ausgebildet sind.

Bei Klappenabdichtungen der genannten Art müssen ferner herstellungsbedingte Fertigungsungenauigkeiten sowie thermisch bedingte Deformationen der Klappen sowie betreffender Wandgegenflächen wie aber auch betreffender Dichtungsträger selbst mit berücksichtigt werden.

Aus der DE-OS 29 46 324 ist eine Spaltabdicht-Einrichtung für eine Schubstrahlablenkvorrichtung bekannt; zwischen ortsfestem Ende eines stationären Strahlrohrs und einem mit der Schubdüse um einen punkt räumlich schwenkbaren Rohrteil soll dabei eine bewegungs-kompensatorische ringförmige Abdichtung vorgesehen sein; sie soll aus einem in Umfangsrichtung in gegenseitiger Überlappung segmentiert ausgebildeten Dichtring bestehen; der Dichtring soll mit Axial- und Radialspiel in einer Umfangsnut sitzen und bei abgeschaltetem Triebwerk von einer am Nutgrund sitzenden Wellfeder in seiner Lage gehalten sein; aufgrund im Betrieb herrschenden Differenzdruckes soll der Dichtring gegen den bewglichen Teil (Schale) des Schwenkrohrs und eine vordere Tragschulter (Nutseitenwand) gedrückt werden, in die Druckausgleichstaschen eingelassen sind. Dabei sollen vorrangig exzentrische Formänderungen der verhältnismäßig dünnen Schalenwand, als bewegliche Dichtgegenfläche, Berücksichtigung finden. Bei diesem ausschließlich auf punktsymmetrische Düsenverschwenkung abgestimmten Dichtkonzept ergeben sich u.a. folgende Nachteile: Hoher Fertigungsaufwand; lose Anordnung der Dichtsegmente mit der Gefahr großer gegenseitiger Leckspalte; hohes Verschleißrisiko, insbesondere hinsichtlich hoher Temperaturbeanspruchung.

Die Erfindung geht gemäß einleitendem Teil des unabhängigen Patentanspruchs 1 von einer für Schubdüsen geeigneten Absperrdichtung nach Fig. 5 der GB-A-2087306 aus. Zwischen einer Seitenwand und einer sich quer dazu erstreckenden schwenkbaren Düsenklappe soll der Dichtspalt mittels eines im Querschnitt zylindrischen Dichtkörpers abgesperrt werden; dabei soll der Dichtkörper vorrangig mit Wirkung einer Blattfeder, von der Düsenklappe aus, abdichtend gegen die Seitenwand gepreßt werden; dabie kann ferner die durch die Feder hervorgerufene mechanische Anpreßkraft durch eine aus zusätzlich zugeführtem Heißgas gewonnene Gaskraft unterstützt werden; hierzu steht eine Kammer -stromauf der Blattfeder - innerhalb der Düsenklappe über Öffnungen mit der Heißgasströmung auf einer Klappenseite in Verbindung.

Die US-A-4,110,972 behandelt Abdichtmittel für den beweglichen bzw. schwenkbaren Zentralkörper einer zweidimensionalen Schubdüse eines Gasturbinentriebwerks. Der im übrigen keilförmige Zentralkörper soll aus zusammenfaltbaren Wandteilen bestehen, derart, daß Schubvektorsteuerung und variable Düsengeometrie möglich sind. Entsprechende Dichtmittel sollen verhindern, daß Heißgase in den Zentralkörper entweichen oder, daß im Zentralkörper kanalartig geführte Kühlluft aus letzterem entweicht. Dabei sind u.a. gleichzeitig zweidimensional federgestützt arbeitende Dichtmittel vorgesehen; diese schließen jeweils an einer lateral verschiebbaren feder-gestützen Dichteinheit kolbenartige und zusätzlich von zugeführter Kühlluft aus einen betreffenden Wandteil beaufschlagbare Stellglieder ein; diese bilden die primäre Berührungsdichtung aus und sind in einer Richtung quer zur lateralen Verschieberichtung der Dichteinheit, durch eine Feder gegenüber einem Gehäuse abdichtend verspannt.

Der Erfindung liegt die Aufgabe zugrunde, eine eingangs genannte Absperrdichtung anzugehen, die im Hinblick auch auf extrem hohe Differenzdrücke und Bauteiltemperaturen, bei vergleichsweise einfachem Aufbau, zuverlässig und verschleißarm ist.

Die gestellte Aufgabe ist gemäß Patentanspruchs 1 erfindungsgemäß gelöst.

Bei der Erfindung ergibt sich eine gliederartige Leistendichtung, bei der an betreffenden Gelenkstellen- bzw. -punkten die einzelnen Glieder relative Kippbewegungen zueinenander ausführen können; ferner sind Querverschiebungen des Dichtkörpers in gemäß der Zergliederung individueller Weise über die Gesamtlänge der Absperrdichtung hinweg möglich. Auf diese Weise können betriebsbdingte, z.B. thermisch verursachte leichte Wellungen oder Deformationen an der betreffenden anderen, z.B. stationären Wand, gegenüber der zwischen zwei unterschiedlich fluidisch und druckbeaufschlagten Räumen abzudichten ist, kompensiert werden. Auch z.B herstellungsbedingte Formtoleranzen können einwandfrei abdichtend kompensiert werden; z.B. über die erwähnte Kugelverbindung der Glieder an den betreffenden Gelenkstellen wird ein dichtleistenartiger Verbundkörper ausgebildet, so daß trotz variabler Bewegung der Glieder (quer bzw. räumlich) nur minimale Spalte zwischen sich überlappenden Abschnitten existieren.

Die erfindungsgemäße Absperrdichtung kann auf vergleichsweise einfache Weise hergestellt werden. Z.B. durch einfaches Ausfräsen kann die betreffende Führungsnut im Dichtungsträger hergestellt werden. Im Hinblick auf eine fluidische Differenzdruckbetätigung, z.B. aus den beiden gegeneinander abzudichtenden Räumen, entfallen komplizierte Herstellungsarbeiten für Taschen oder dergleichen (Druckausgleichs-Kammern) an einer Innenwand der Führungsnut; im Hinblick darauf können z.B. Stütznoppen an den Gliedern vorgesehen sein, die im übrigen auch ein Herausfallen des Dichtkörpers aus der Nut gegenüber dem betreffend genannten Steg verhindern. Zu Gunsten einer vergleichsweise einfachen Herstellung des Dichtungsträgers nebst Führungsnut ist es ferner vorteilhaft, daß auf der andere Seite an den Gliedern des Dichtkörpers die weiter genannten Führungsstege angeordnet sind, die z.B. für die Differenzdruckbetätigung die erforderlichen sekundären Leckflußpassagen des mit verhältnismäßig hohem Druck aus dem einen Raum zugeführte Sperrfluids bereitstellen, welches u.a. gegen die Rückseiten der Glieder geführt wird, um diese verhältnismäßig sanft an deren gerundeten Berührungsflächen gegen das betreffende andere Wandelement zu drücken.

Eine ferner genannte "Wellfeder" kann in der Führungsnut - zwischen den Rückseiten der betreffenden Glieder und dem Nutgrund- vorgesehen sein; die Wellfeder stellt einen "Ruheabstand" in Außerbetriebsstellung bereit, der zum sofortigen Aufbau des im Betrieb wirkenden Differenzdruckes dienlich ist; anstelle der Wellfeder kann vorteilhaft ein rückwärtiger "Anfahr-Steuerdruck" aus dem betreffenden Dichtungsträger des einen Wandelements bereitgestellt werden; dieser Anfahr-Steuerdruck bringt die Glieder zunächst in Betriebsstellung, wobei, z.B. nach ventil-gesteuerter Abschaltung dieses Druckes, die sofortige Differenzdruck-Betätigung der Dichtung über den rückwärtigen Zwischenraum in der Führungsnut erfolgen kann.

Ferner schafft die Erfindung ein verschleißarmes Dichtungskonzept; dies insbesondere auch im Hinblick auf die Beherrschung vergleichsweise hoher Bauteiltemperaturen, wenn es also darum geht, gegenüber einer extrem heißen Strömung (Heißgas) wirksam abdichten zu sollen sowie unter Einbeziehung der Tatsache, daß das mindestens einen Dichtungsträger enthaltende eine Wandelement z.B. häufig einer klappenartigen Verstellbewegung bzw. einer in einer Ebene räumlichen Verstell- oder Verschiebebewegung unterworfen ist; im zuletzt genannten Fall könnte es sich z.B. um eine sogenannte "Primär- oder Sekundärklappe" einer variablen Schubdüse für ein kombiniertes Turbo-Staustrahltriebwerk handeln; genannte Klappen wären dabei in Querrichtung zu beiden Seiten betreffender stationärer Wände eines quadratischen oder rechteckigen Düsengehäuses in abdichtender Weise entlang zu bewegen. (s.h.: DE-OS 39 01 487).

Im Hinblick auf ein derartiges beispielhaftes Einsatzspektrum ist die angegebene Kühlkonfiguration der betreffenden Glieder des Dichtkörpers vorteilhaft; dabei kann u.a. auch ein Verschleiß und Reibwiderstand vermindernder Luft- und Kühlfilm zwischen der gerundeten Berührungsfläche und der betreffenden Gegenfläche am anderen Wandelement (Gehäusewand) ausgebildet werden.

Selbst dann, wenn von einer besonderen Kühlung abgesehen wird, ist es im Interesse einer Verschleißminimierung vorteilhaft, wenn ein gewisser Dichtungsleckfluß an der "Primärdichtung" über ein verhältnismäßig kaltes Absperrfluid (Druckluft) - z.B. aus dem Flugtriebwerk - gewonnen wird.

Vorteilhaft ist gemäß der Erfindung ferner die örtlich gezielte Kühlbarkeit und Verschleißreduzierung übriger stets vorhandener Kontaktflächen und -bauteile der Absperrdichtung; so z.B. an der betreffenden einen "Sekundärdichtung", die zwischen dem dortigen Steg am Dichtungsträger und den beweglichen Dichtungsgliedern ausgebildet ist.

Vorteilhaft ist ferner eine federgestützte, praktisch "kolbenartige" Differenzdruck-Steuerung der Dichtungsglieder möglich, so daß die Glieder des Dichtkörpers immer in Außerbetriebsstellung in einer exakten Vorgabestellung verankert sind.

Vorteilhaft können gemäß der Erfindung ferner ein und dieselben dichtungsträgerintegralen Bohrungen, Kammern bzw. Zuleitungen verwendet werden, um sowohl zunächst den sogenannten "Anfahr- Steuerdruck" bereitzustellen als auch, nach erfolgter Verschiebung der Glieder in Betriebsstellung, die Kühl- Sperrfluidzufuhr in die Glieder bereitzustellen; nach Abschaltung des Anfahr- Steuerdrucks kann automatisch die Differenzdruck-Betätigung der Dichtung (Glieder) erfolgen.

Bezüglich vorteilhafter Ausgestaltungen der Erfindung nach Patentanspruch 1 wird im übrigen auf die Patentansprüche 2 bis 21 verwiesen.

Anhand der Zeichungen ist die Erfindung beispielsweise weiter erläutert; es zeigen:
- Fig. 1: eine quer geschnitten dargestellte Ausführungsform der Absperrdichtung an einem Dichtungsträger des einen Wandelements in abdichtender Zuordnung zum anderen Wandelement,
- Fig. 2: die Ausführungsform grundsätzlich nach Fig. 1, jedoch unter Berücksichtigung einer Schräganstellung des Dichtungsträgers nebst Führungsnut und des als gliederartiger Verband ausgebildeten Dichtkörpers,
- Fig. 3: ein in Längsrichtung symmetrisch geschnitten dargestellter Abschnitt des Dichtungskörpers, worin eine Gelenkstelle mit räumlicher Kugelverbindung an sich überlappenden Abschnitten verdeutlicht sind,
- Fig. 4: ein Abschnitt des Dichtkörpers im Sinne der Fig. 3, jedoch hier die kugel-gelenkartige Verbindung dreier aufeinander folgender Glieder erläuternd,
- Fig. 5: eine in die Zeichnungsebene gekippt dargestellte Draufsicht eines drei-gliedrigen Dichtkörperabschnitts am in Längsrichtung aufgeschnitten dargestellten Dichtungsträger nach Fig. 2, sowie in Absperrstellung der Dichtung zur betreffenden anderen Wand,
- Fig. 6: die Draufsicht eines drei-gliederigen Dichtkörperabschnitts unter Verdeutlichung einer gekühlten Dichtgliedvariante und jeweils gegen ein Federglied vom aufgebrachten Differenzdruck verstellbar und automatisch in Ruhestellung bringbar, hier wieder in Zuordnung zum anderen ortsfesten Wandelement sowie zum örtlich aufgeschnitten dargestellten Dichtungsträger
- Fig. 7: eine aus A-A der Fig. 6 gesehene, quergeschnitten dargestellte Variante mit gekühlten Gliedern und mit in den Dichtungsträger integrierten, voneinander getrennten Zuführungen für Anfahrsteuerdruck und Kühl-Sperrluftzufuhr,
- Fig. 8: Ansicht und Ausführung der Absperrdichtung nach Fig. 7, hier jedoch unter zusätzlicher Schräganstellung im Sinne der Fig. 2,
- Fig. 9: die aus B-B der Fig. 6 gesehene, quer geschnitten dargestellte, gekühlte Variante nach Fig. 7,
- Fig. 10: eine weitere Variante in Ansicht gemäß Fig. 9, unter zusätzlichen Einschluß einer Kühl- und Sperrfluidzufuhr zum frontalen Steg, und damit zur Kontaktfläche (Sekundärdichtung) gegenüber den betreffenden Abschnitten der Glieder-Dichtung,
- Fig. 11: die Variante in Sinne der Fig. 10, hier jedoch mit stegseitig integrierter Leiste aus einem porösen metallischen Werkstoff und mit gesondert daran angeschlossener Kühl--Sperrluftzufuhr zwecks Kontaktflächenbespülung,
- Fig. 12: eine gegenüber Fig. 11 dadurch abgewandelte Variante, daß dem Steg (Leiste) nebst Kontaktfläche sowie den betreffenden Gliedern Kühl-Sperrfluid direkt aus einer Kühlstruktur des betreffenden Wandelements zugeführt wird,
- Fig. 13: eine quer geschnitten dargestellte, am Dichtungsträger des einen Wandelements angeordnete Doppeldichtung, worin z.B. die hier oberen Glieder in Sinne der Fig. 7 dargestellt und gekühlt sind, die unteren Glieder, in Grundausbildung gemäß Fig. 1 und 2 ausgebildet, hier (Fig. 13) jedoch mit Stegen und Noppen um 180°C verdreht eingebaut gezeichnet sind und mit zentraler Hochdruck-Sperrfluid-zufuhr für Differenzdruck-Betätigung,
- Fig. 14: eine im wesentlichen von Fig. 13 durch eine Neigung der betreffenden Dichtungsglieder abweichende Doppeldichtung,
- Fig. 15: eine Doppeldichtung nach Fig. 14, jedoch mit einem in den Dichtungsträger integrierten gemeinsamen Zuleitungssystem für einen Anfahr- Steuerdruck und Sperrfluid in Richtung auf die Rückseiten der Dichtglieder (Differenzdruck-Betätigung) und
- Fig. 16: eine in der Außerbetriebsstellung dargestellte Variante der Dichtung, bei der über dieselben Zuleitungen für Kühl- und Sperrluft, die in Betriebsstellung der Dichtung örtlich an die Kühlführungen der Dichtglieder angeschlossen sind, in der ersten Phase der Betätigung der Anfahr- Steuerdruck aufgebracht wird, hier in Abwandlung der Absperrdichtung nach Fig. 10.

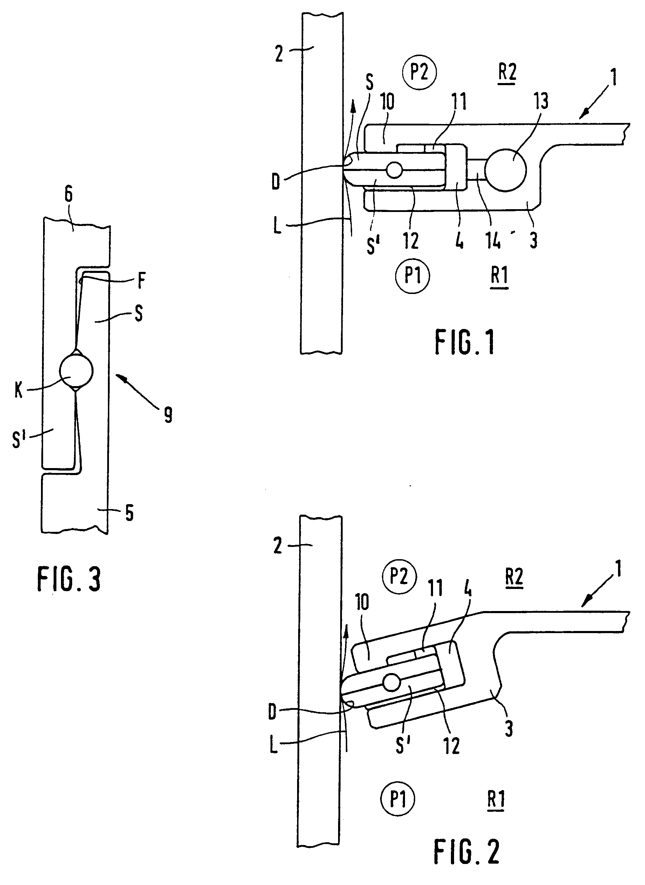

In Fig. 1 und nachfolgenden Beispielen ist das eine, z.B. klappenartig bewegliche oder schwenkbare Wandelement mit 1 und ein etwa im rechten Winkel dazu verlaufendes anderes, hier z.B. stationäres Wandelement, mit 2 bezeichnet. Die später noch näher erläuterte Absperrdichtung sorgt dafür, daß zwei fluidisch unterschiedlich druckbeaufschlagte und vom einen Wandelement 1 voneinander getrennte Räume R1, R2 gegeneinander abgedichtet sind. Es wird dabei die Absperrdichtung vom Differenzdruck P1>P2 betätigt. Beim stationären Wandelement 2 kann es sich z.B. um eine feste Wand eines Düsengehäuses handeln; beim einen Wandelement 1 um eine schwenkbare Düsenklappe; für einen derartigen Anwendungsfall - z.B. quadratisches oder rechteckiges Düsengehäuse - wäre selbstverständlich in allen Fällen von einer ebenfalls hier auf der rechten Seite am Wandelement befindlichen Absperrdichtung auszugehen im Hinblick auf die daran angrenzende rechte Wand des Düsengehäuses.

Unter Bezug auf den Anwendungsfall bei einer variablen Schubdüse kann also der eine Raum R2 der vom heißen Abgasstrom des Strahltriebwerks bzw. des Nach- oder Zusatzbrenners beaufschlagte Düsenraum mit variabler Geometrie sein; der Raum R1 kann von einer ins Düsengehäuse integrierten Kammer bzw. Druckausgleichskammer gebildet sein, die mit aus dem Triebwerksverdichter an geeignete Stelle entnommener Druckluft in der Funktion als verhältnismäßig kühler Sperrluft beaufschlagt wird.

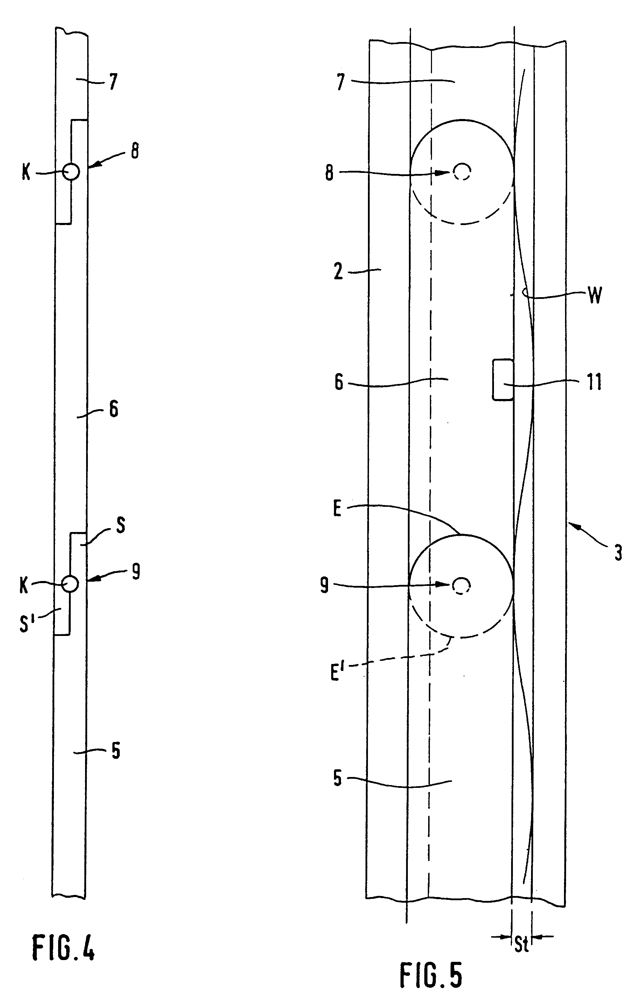

Für die Ausbildung der Absperrdichtung weist das relativ zum stationären anderen Wandelement 2 verstell-, schwenk- oder verschiebbare eine Wandelement 1 einen sich in Längsrichtung der Dichtung erstreckenden Dichtungsträger 3 auf, in den eine sich in Dichtungslängsrichtung erstreckende Führungsnut 4 eingearbeitet ist; in der Führungsnut 4 ist der aus Gliedern 5,6 und 7 (s.h. auch Fig. 4 und 5,) zusammengesetzte Dichtkörper u.a. querverschieblich angeordnet; die einzelnen Glieder 5,6,7 greifen an Gelenkstelle 8,9 räulich relativ zueinander beweglich bzw. kippbar ineinander ein. Vorzugsweise greifen die Glieder, z.B. 5,6, mit sich überlappenden Abschnitten S,S' ineinander, die in weiterer bevorzugter Ausführung jeweils - in Längsrichtung gesehen - etwa halbkreisförmige Enden E,E' (Fig.5) aufweisen. Gemäß Fig. 3 und 4 sind die betreffenden Abschnitte S,S' an der Gelenkstellen (8,9) insbesondere durch Kugeln K miteinander in Verbindung. Aus Fig. 3 erkennt man besonders, daß von den an einer Kugel K sich einander gegenüberliegenden Oberflächen, die eine am Abschnitt S' gerade, die andere Obefläche F ballig, d.h., rotationssymmetrisch zu betreffenden Kugel K ballig bzw. gewölbt ist, um gegenseitige relative räumliche bzw. Kippbewegungen zu ermöglichen. Eine relevante Gelenkverbindung könnte erfindungsgemäß auch als kugelpfannen- bzw. kugel-kalottenartig umschrieben bzw. ausgebildet werden; für die genannte Anordnung muß ein hinreiched bemessenes Einbauspiel in der betreffenden Führungsnut 4 zugrunde gelegt werden.

Wie ferner u.a. aus Fig. 1 und 2 erkennbar, bildet der Dichtungsträger 3 am hier vorderen, oberen Ende einen Steg 10 aus mit einer inneren Kontaktfläche gegenüber dem zergliederten Dichtkörper als Sekundärdichtung im Betrieb, stromauf derselben die Führungsnut 4 auf eine Druckausgleichskammer erweitert ist, in der sich der Dichtkörper mit jeweils mindestens einem an einem Glied 5 bzw. 6 angeordneten Vorsprung, z.B. einer Noppe 11, beweglich abstüzt; auf der gegenüberliegenden Seite weisen die betreffenden Glieder, z.B. 5,6, als Führungsstege 12 ausgebildete Abstützmittel auf, die in Querrichtung verlaufen und in Längsrichtung der Absperrdichtung in vorgegebenen gegenseitigen Abständen angeordnet sind. Zusammen mit der ihnen unmittelbar benachbarten Innenwand der Führungsnut 4 bilden die genannten Führungsstege 12 sekundäre Leck- bzw. Zuströmpassagen für das Hochdruck-Sperrfluid aus dem Raum R 1 in den rückwärtigen Raum der Führungsnut 4 aus, also zwischen Nutgrund und jeweiligen Rückseiten der Glieder 5,6,7.

Bevor die eigentliche Differenzdruckbetätigung (P1>P2) erfolgt, wird im genannten rückwärtigen Raum der Führungsnut 4 ein Anfahr-Steuerdruck aufgebracht; das Hochdruckfluid für diesen Anfahrsteuerdruck kann von einer besonderen Druckluftquelle erzeugt und über eine sich in Dichtungslängsrichtung erstreckende Bohrung 13 oder Kammer und letztere mit dem benannten rückwärtigen Raum in der Führungsnut 4 verbindende Querbohrungen 14 zugeführt werden. Vorteilhaft sind die betreffende Bohrung 13 nebst Querbohrungen 14 in das betreffende Wandelement 1 bzw. in den Dichtungsträger 3 integriert. In der dargestellten Betriebsstellung ist davon auszugehen, daß an der Primärdichtung, zwischen einem Abschnitt der abgerundeten Berührungsfläche D und betreffender Gegenfläche des anderen Wandelements 2 eine Absperr-Leckströmung L von R1 nach R2 sich ausbildet, die zugleich reib- und verschleißminimierend wirkt; dieses etwa im Sinne einer aerodynamisch gestützten Berührungsdichtung.

Mit Ausnahme der örtlich abgewinkelten Anordnung des Dichtungsträgers 3 entspricht die Ausführung nach Fig. 2 im wesentlichen derjenigen nach Fig. 1, wobei funktiononell gleiche Bauteile mit identischen Bezugszeichen belegt sind. Anstelle des Aufbaus eines zusätzlichen Anfahr-Steuerdruckes (Bohrungen 13,14 - Fig.1) kann z.B. die in Fig. 5 gezeigte Wellfeder W im rückwärtigen Teil der Führungsnut 4 - zwischen den Rückseiten der Dichtglieder 5,6,7 und dem Nutgrund - angeordnet sein; der von der Wellfeder W bereitgestellte Stützabstand St (Fig.5) stellt zugleich den Raum für sofortige Differenzdruckbetätigung bereit.

Die örtlich abgewinkelte Anordnung kann je nach den herrschenden Drücken P1, P2 in den Räumen R1, R2 eine leichtere klappenartige Verstellung des einen Wandelements 1 in einer Verstellrichtung bewirken im Hinblick auf bei Verstellung zu überfahrende Unebenheiten (leichte Beulen) an dem anderen Wandelement 2. Die Schräganstellung des Dichtungsträgers 3 nebst Führungsnut 4, und damit des Dichtungskörpers (Glieder 5,6,7) fördert die Tendenz des Dichtkörpers, gegen das andere Wandelement 2 aus der Führungsnut 4 zu rutschen und selbst bei abnehmender Differenz zwischen den Drücken P1, P2 die dichtend Anlage zu gewährleisten.

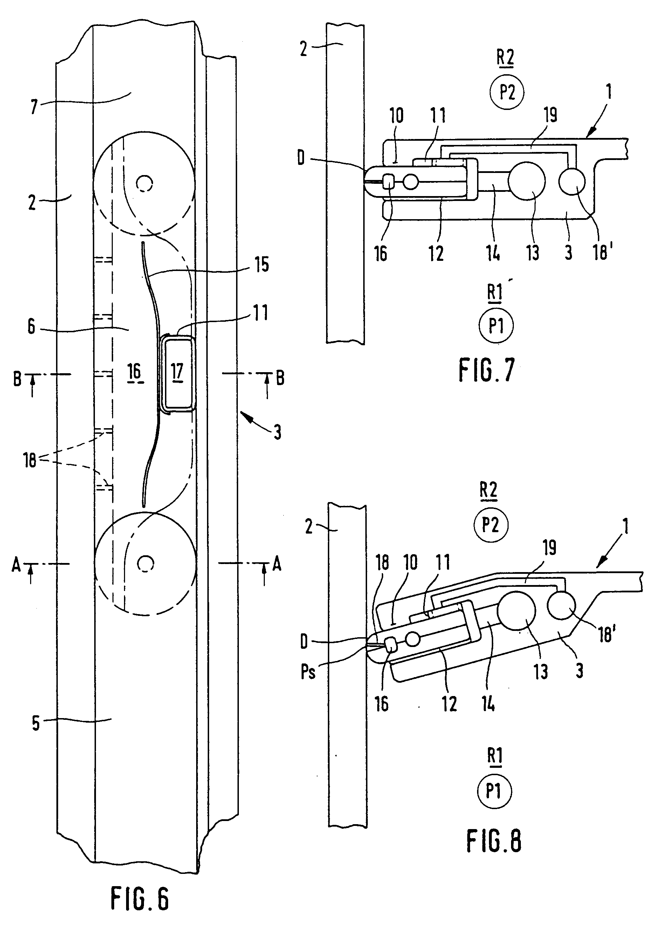

Gemäß Fig. 6 sind die einzelnen Glieder des Dichtkörpers, z.B. 6, gegen die Rückstellkraft von Federn 15 verstellbar, bzw. vom Differenzdruck (P1>P2) verschiebbar. Wie dargestellt, kann es sich um wellfederartige Elemente handeln, die hier z.B. in der von der Führungsnut 4 ausgebildeten Druckausgleichskammer, zwischen dem Steg 10 (Fig.1 und 2) und der Stütznoppe 11, verankert sind; es ergibt sich dadurch eine automatische, kolbenartige Differenzdruckbetätigung der Absperrdichtung. Fig. 6 zeigt die Kombination z.B. der gekühlten Dichtungskonzeption mit der Rückstellfeder 15.

Gemäß den gekühlten Konzepten nach Fig. 6 bis 10 sollen also die betreffenden Glieder 5,6,7 jeweils eigene Führungen für ein Kühlmittel aufweisen, die an der abgerundeten Berührungsfläche D des zergliederten Dichtkörpers enden; im Detail bildet hierzu jedes betreffende Dichtglied, z.B. 6, eine sich in Längs- und Querrichtung erstreckende Verteilerkammer 16 (Fig.6,9 und 10) aus, die mit einem seitlich von dieser abgewinkelten, schachtartigen Zufuhrkanal 17 verbunden ist; in gegenseitigen Abständen angeordnete Bohrungen 18 (Fig.6) verbinden die Verteilerkammer 16 mit der abgerundeten Berührungsfläche D des zergliederten Dichtkörpers. Neben den zu Fig. 1 schon erwähnten Bohrungen 13,14 für die Zufuhr des Anfahr-Steuerdrucks weisen die betreffenden Dichtungsträger 3 der einen Wandelemente nach Fig. 7 bis 10 eine Längsbohrung 18 bzw. -kammer und mit diesen verbundene Zuleitungen 19 auf, die auf einer Seite hier z.B. stets mit dem von der Stütznoppe 11 ausgebildeten, schachtartigen Zufuhrkanal 17 in Verbindung stehen. Auch die Kühl--Sperrfluidzufuhr ist dabei stets also in das eine Wandelement 1 bzw. in dessen Dichtungsträger 3 integegriert.

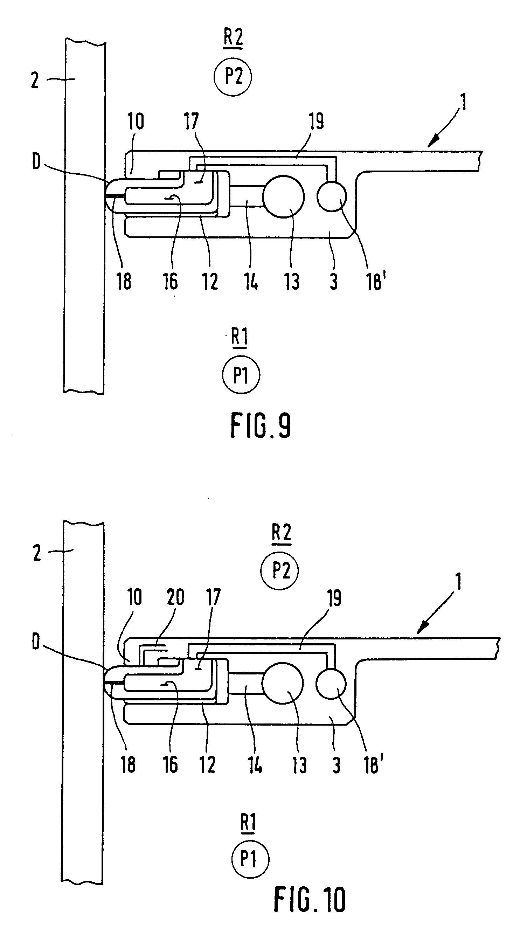

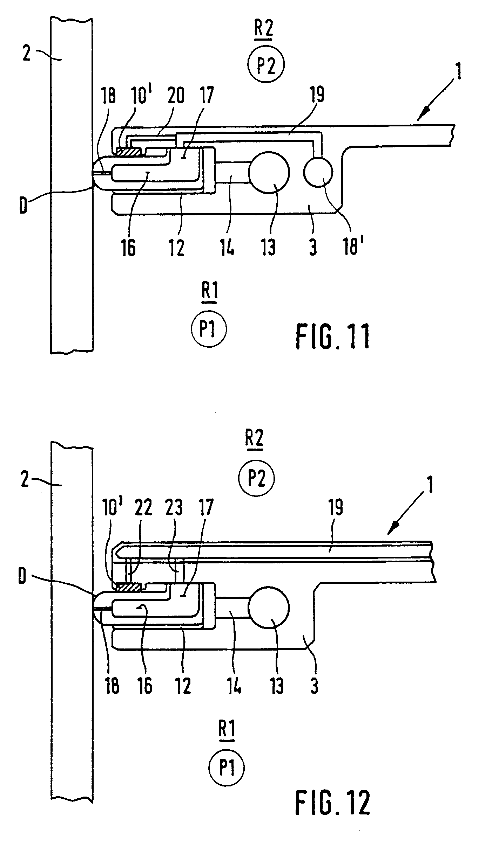

Um die eingangs schon erwähnte Kontaktfläche - zwischen Steg 10 und angrenzender Berührungsflächen der Dichtelemente 5,6,7 - an der Sekundärdichtung z.B. mit Luft zu bespülen, bzw. um den Steg 10 örtlich zu kühlen, sind weitere Leitungen 20 vorgesehen, in den Dichtungsträger 3 integriert sowie an eine separate Druckluftquelle angeschlossen; gemäß Fig. 11 können die weiteren Leitungen 20 aber auch mit den Zuleitungen 19 verbunden sein, über die die in den Gliedern, z.B. 6, enthaltenen Kühlmittelführungen 17,16,18 an die Kühl-Sperrmittel(luft) zufuhr angeschlossen sind. Fig. 11 weicht von Fig. 10 weiter dadurch ab, daß der zuvor erwähnte Steg 10 von einem leistenartigen Führungsbauteil 10' ausgebildet wird; dieses Führungsbauteil kann aus einem hoch-temperaturbeständigen, metallisch porösen Leichtbaumaterial gefertigt sein; über das von einer Seite über die weiteren Leitungen 20 zugeführte Sperr-Kühlfluid, z.B. Druckluft, kann das Führungsbauteil 10' über die darin eingeschlossenen Poren intensiv gekühlt werden sowie eine Richtung auf die betreffende Kontaktfläche abfließende, gezielt gesteuerte Strömung ausbilden. Das Führungsleisten-Konzept kann sinngemäß auch bei den Absperrdichtungen nach Fig. 1 oder 2 eingesetzt werden, bei denen der zergliederte Dichtkörper selbst nicht unmittelbar gekühlt ist.

Beim Ausführungsbeispiel nach Fig. 12 weist das eine Wandelement 1, z.B. als Düsenklappe, auf der dem Raum R2 zugewandten, z.B. einem Heißgasstrom ausgesetzten Seite, eine mit einem Kühlmittel druckbeaufschlagte Kühlstruktur 21 auf (Kanäle), aus der direkt über Bohrungen 22 bzw. 23 dem leistenartigen Führungsbauteil 10' und der zugehörigen Kontaktfläche bzw. den Kühlmittelführungen -Schacht 17, Verteilerkammer 16, Bohrungen 18 (Fig.6) -Kühl-Sperrfluid zuführbar ist.

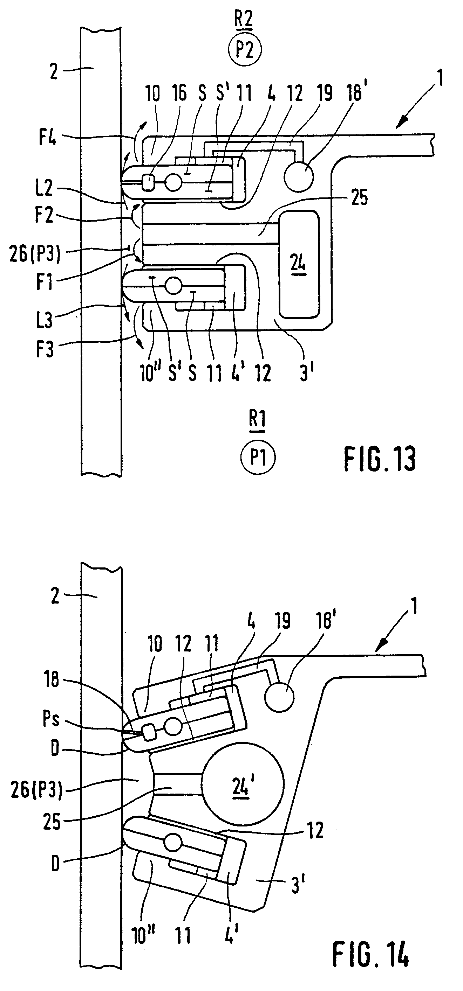

Fig. 13 zeigt eine Doppeldichtung. Hierzu weist das eine Wandelement zwei neben- bzw. übereinander angeordnete Führungsnuten 4,4' mit darin angeordneten zergliederten Dichtkörpern auf. Die in Fig. 13 betreffenden einen unteren Dichtglieder sind durch die sich überlappenden Abschnitte S,S' charakterisiert, die allerdings in Fig. 13 (unten) gegenüber Fig. 2 seitenverkehrt angeordnet sind, mit Führungsstegen 12 oben bzw. betreffender Noppe 11 unten. Die in Fig. 13 oberen, durch die sich überlappenden Abschnitte S,S' charakterisierten Glieder, z.B. 5,6 (Fig.6), beruhen auf den gekühlten Absperrdichtungskonzept mit dem prinzipiellen Aufbau der Dichtglieder gemäß Fig. 6 bis 12, wobei Fig. 13, oben, etwa im Sinne A-A der Fig. 6 und in Entsprechung zu Fig. 7 quer geschnitten zu verstehen wäre.

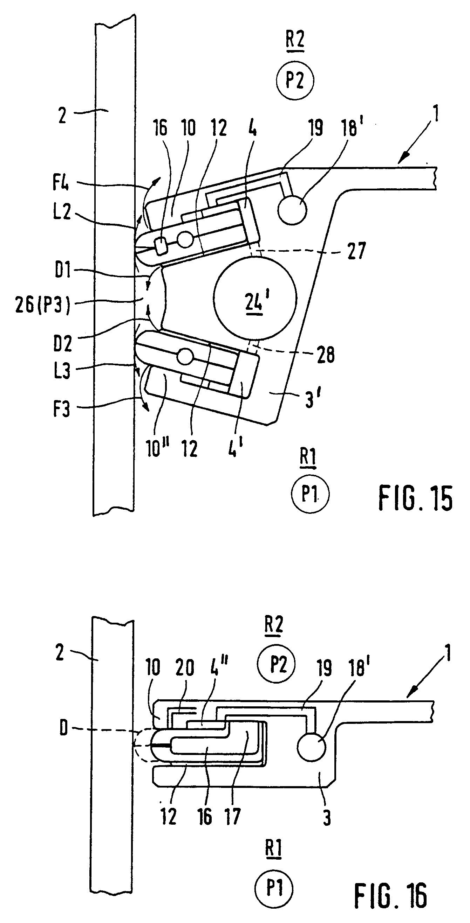

Hinsichtlich der Kühl- und Sperrluftversorgung, mit Bohrung 18 bzw. Längskanal und Zuleitungen 19 hierfür, ist Fig. 13 ebenfalls praktisch mit Fig. 7 bis 11 identisch. Eine gezielte Kühlung und Kantaktflächenbespülung am Steg 10, gemäß Fig. 10, bzw. über oder an einem leistenartigen Führungbauteil 10' (Fig.11) wäre ebenfalls in Fig. 13 oder auch in Fig. 14 und 15, jeweils z.B. oben, realisierbar. Eine sinngemäße Übertragung des Konzepts nach Fig. 12 auf die jeweils örtlich oberen, besonders gekühlten Absperrdichtungen nach Fig. 13, 14 und 15 wäre ebenfalls vorstellbar.

Gemäß Fig. 13 ist ferner im Dichtungsträger 3' ein Längskanal 24 angeordnet, der an die Zufuhr eines Hochdruckfluids, z.B. Kompressorluft, angeschlossen ist und mit etwa quer und symmetrisch den übrigen Dichtungsträger 3' durchsetzenden Bohrungen 25 mit einem Zwischenraum 26 in Verbindung steht, der zwischen beiden Absperrdichtungen und der anderen Wand 2 ausgebildet ist. Über 24,25 nach 26 erfolgt hier der erforderliche Differenzdruckaufbau, wobei P3 im Zwischenraum 26>P1 im Raum R1 sowie > P2 im Raum R2 ist. Gemäß F1,F2 strömt Druck- und Sperrfluid zunächst über die zwischen den jeweils betreffenden Führungsstegen 12 belassenen sekundären Zuströmpassagen in die jeweils rückwärtigen Räume - zwischen den Dichtkörperrückseiten und jeweiligem Nutgrund - ein (z.B. durch Wellfeder W gebildeter Spalt St gemäß Fig. 5); über die örtlich obere und untere Druckausgleichskammer - vor den jeweiligen Stegen 10 bzw. 10'' - entsteht ein sekundärer Leckfluß entlang der Kontaktflächen (Sekundärdichtung), dessen Abströmrichtungen in die betreffende Räume R1,R2 durch die Pfeile F3,F4 gekennzeichnet ist. Aus den Zwischenraum 26, in den der Druck P3 herrscht, können Sperrluftanteile gemäß Pfeilen L2;L3 in die Räume R2, R1 abfließen, und zwar zwischen der gerundeten Berührungsflächen der zergliederten Dichtkörpers und dem anderen Wandelement 2. Dem Sperrluftanteil L2 wird in Richtung auf den Raum R 2 verbrauchtes Kühl- Sperrfluid, z.B. Druckluft, zugeführt, die aus den Bohrungen 18 der Dichtglieder 5,6,7 abfließt.

Unter Zugrundelegung gleicher Funktionsweisen und Nomenklatur weicht Fig. 14 von Fig. 13 dadurch ab, daß beide Führungsnuten 4,4' nebst zergliederten Dichtkörpern relativ zueinander in Richtung auf das andere Wandelement 2 geneigt im Dichtungsträger 3' des Wandelements 1 angeordnet sind. Anstelle der quadratischen Kammer 24 sieht Fig. 14 z.B. eine relativ groß bemessene, sich in Längsrichtung im Dichtungsträger 3' erstreckende Bohrung 24' vor.

Fig. 15 zeigt eine geneigte Doppeldichtung nach Fig. 14, die sich in der Ausbildung der örtlichen Druckdifferenzen von Fig. 13 und 14 hauptsächlich dadurch unterscheidet, daß anstelle der vormaligen Bohrungen 25 nach Fig. 13 und 14 - die betreffende Längsbohrung 24' über beidseitig davon abgewinkelte Bohrungen 27,28 mit den rückwärtigen räumen in den Führungsnuten 4,4' in Verbindung steht, um Anfahr-Steuerdruck sowie den erforderlichen Druck für die betriebliche Differenzdruckbetätigung rückwärtig an den zergliederten Dichtkörpern aufzubringen. In diesem Fall werden die an bzw. von den Stegen 12 ausgebildeten sekundären Leckflußpassagen - im Gegensatz zu Fig. 13 und 14 - von hinten nach vorne durchströmt, so daß das zugeführte Druckmedium gemäß Pfeilen D1, D2 in den Zwischenraum 26 abströmt, in dem gemäß Fig. 13 und 14 wieder ein Druck P 3 herrscht, der >P1 und >P2 ist; im übrigen ergibt sich dann in Fig. 15 die gleiche Abströmcharakteristik (L2,F4 bzw. L3,F3) wie in Fig. 13 und 14.

Unter Verwendung gleicher Bezugszeichen für gleiche oder ähnliche Bauteile und Funktionen verkörpert Fig. 16 eine Absperrdichtung, bei der zunächst der Anfahr-Steuerdruck über die Bohrung 18 nebst Zuleitungen 19 über den später, im reinen Differenzdruckbetrieb, als Druckausgleichskammer 4'' wirkenden Raum und von dort gegen die Rückseiten der betreffenden Glieder des Dichtkörpers geführt wird, um diesen - gemäß gestrichelter Position - gegen das andere Wandelement 2 zu verschieben (Betriebsstellung). In dieser Stellung kommunizieren die Zuleitungen 19 jeweils über den betreffenden Schacht 17 mit der jeweiligen Verteilerkammer 16 und den Bohrungen 18 (Fig.6) für die Kühl-Sperrluftversorgung. Es ist also über Bohrung 18 und Zuleitungen 19 entweder Anfahr-Steuerdruck- oder Kühl-Sperrfluid-Versorgung möglich. Für beide Versorgungsarten ist eine nicht dargestellte, z.B. ventilgesteuerte Entnahme von Druckluft aus einem Hochdruckverdichter eines Triebwerks, vorstellbar. In der gestrichelt dargestellten Betriebsstellung erfolgt die Betätigung der Absperrdichtung aus der Differenz der Drücke P1,P2, d.h. P1>P2, in den Räumen R1>R2, wie sinngemäß z.B. schon zu Fig. 1 erläutert. Auch auf eine Doppeldichtung, z.B. nach Fig. 15, oben, wäre die Kombination aus Anfahrsteuerdruck- oder Kühl-Sperrfluidversorgung über jeweils gleiche Bohrung 18 und Zuleitungen 19 sinngemäß übertragbar.

Die zu Fig. 11 und 12 erläuterte Führungsleiste 10' kann aus einem porösen, temperaturbeständigen Leichtbaumaterial, z.B. als sogenannter "metallischer Schwamm" gefertigt sein; das gleiche gilt für die Ausführbarkeit der einzelnen Glieder, z.B. 5,6 und 7 (Fig.6) des Dichtkörpers.

In vorteilhafter Ausgestaltung können die Führungsleiste 10' (Fig. 11 und 12) und/oder die Glieder, z.B. 5,6 und 7 (Fig.6) - unter Einschluß des jeweiligen Schachts 17 und der Verteilerkammer 16 aus einem hohlkugelartigen, intermetallisch verbundenen, temperaturbeständigen Leichtbaumaterial gefertigt sein. Anstelle vormaliger Bohrungen 18 (Fig.6) könnte dabei die eine Endseite des zergliederten Dichtkörpers, in Richtung auf die abgerundete Berührungsfläche D, über die betreffende Porosität gezielt durchströmt bzw. entlang der örtlichen Berührungsfläche kühlend und zugleich zusätzlich abdichtend be- bzw. umspült werden. Auch wäre es möglich, anstelle des jeweiligen Schachtes 17 und der Verteilerkammer 16 in einem Dichtglied, z.B. 6 - Fig.6, eine sinngemäße, örtlich grob strömungsdurchlässige Werkstoffstruktur vorzusehen, mit der die Verweilzeiten des Kühl-Sperrfluids in den Gliedern, je nach örtlichen Temperaturbelastungskriterien, gezielt örtlich anpaßbar wären.

Für die Herstellung des bzw. der hohlkugelartigen Bauteile können metallischen Hohlkugeln dicht gepackt und durch Vorsintern grob verbunden werden; danach können die Hohlräume - unter Belassung der später benötigten Durchströmporosität zwischen den Kugeln - mit einer pulverförmigen Metall-Legierung teilweise aufgefüllt werden, so daß beim anschließenden Sintern intermetallische Verbindungen, als Stege, zwischen den von den Hohlkugeln belassenen Zwischenräumen entstehen; hierauf erfolgt ein Nachsintern so, daß das vorgesinterte Material aus Kugeln und Füllpulver bei entsprechender Temperatur intermetallisch zum Leichtbauwerkstoff örtlich gezielt fest und porös miteinander verbunden wird. In Verbindung z.B. mit Nickel, als Hohlkugelwerkstoff, können die Hohlräume mit elementarem Nickel und Aluminium (Pulver) gefüllt werden, wodurch sich beim nachfolgenden Sintern die intermetallische Verbindung NiAl₃ ergibt.

Insbesondere zu Fig. 6 wäre noch zu erwähnen, daß die einzelnen Verteilerkammern 16 an den sich überlappenden Abschnitten S,S' der Glieder 5,6 und 7 miteinander in Verbindung stehen können, so daß auch von den einzelnen Überlappungsbereichen aus Kühl- und Sperrfluid der Primärdichtung zugeführt werden kann.

Bei einer im Sinne der Fig. 8 und 14 geneigt angeordneten und gekühlt ausgebildeten Absperrdichtung liegt eine z.B. gegenüber Fig. 7 abweichende Tangierungsposition Ps der Berührungsfläche D an der Gegenfläche des anderen Wandelement 2 vor. Um auch bei diesen Varianten die Primärdichtungen effektiv und verschleißarm zu gestalten, können die Kühlbohrungen 18 von den betreffenden Verteilerkammern 16 aus in Richtung auf die Tangierungsposition Ps geneigt verlaufen.

Soweit nicht schon ausdrücklich beansprucht, sind die oben näher beschriebenen und/oder zeichnerisch dargestellten Merkmale im Rahmen der Ausführungsbeispiele für sich oder in der Kombination ebenfalls Gegenstand der Erfindung.

## Patentansprüche

1. Absperrdichtung zwischen winkelversetzt und relativ zueinander beweglich angeordneten Wandelementen (1,2), die unterschiedlich druckbeaufschlagte Räume (R1,R2) voneinander trennen, worin das eine Wandelement (1) mindestens eine, sich in Längsrichtung der Dichtung erstreckende Führungsnut (4) aufweist, in der ein Dichtkörper beweglich angeordnet ist, der eine abgerundete Berührungsfläche (D) aufweist, mit der er die Primärdichtung an einer Gegenfläche des anderen Wandelements (2) ausbildet, dadurch gekennzeichnet, daß
- der Dichtkörper aus zusammengesetzten Gliedern (5,6,7) besteht,
- die Glieder (5,6,7) an Gelenkstellen (9,8) räumlich relativ zueinander beweglich ineinandergreifen,
- die Glieder (5,6,7) des Dichtkörpers von einem an der Dichtung herrschenden Differenzdruck in abdichtender Position gehalten sind.

2. Absperrdichtung nach Anspruch 1, dadurch gekennzeichnet, daß die Glieder (5,6,7) des Dichtkörpers jeweils eigene Führungen für ein Kühlmittel aufweisen, die an der abgerundeten Berührungsfläche (D) enden.

3. Absperrdichtung nach Anspruch 1 oder 2, dadurch gekennzeichnet, daß die Gelenkstellen an sich in Längsrichtung des Dichtkörpers überlappenden, etwa halbkreisförmig endenden Abschnitten (S,S') der Glieder (5,6) ausgebildet sind.

4. Absperrdichtung nach einem der Ansprüche 1 bis 3, dadurch gekennzeichnet, daß die Glieder (5,6) jeweils an einer Gelenkstelle (9) durch eine Kugel (K) räumlich beweglich miteinander gekoppelt sind, wobei zumindest eine von zwei sich an der Kugel (K) einander gegenüberliegenden Oberflächen (F) der Abschnitte (S,S') ballig oder kugelflächenartig gestaltet ist.

5. Absperrdichtung nach einem oder mehreren der Ansprüche 1 bis 4, dadurch gekennzeichnet, daß die Glieder (5,6,7) mit örtlichen Vorsprüngen, insbesondere Noppen (11) und Führungsstegen (12), in der Führungsnut (4) beweglich abgestützt sind.

6. Absperrdichtung nach einem oder mehreren der Ansprüche 1 bis 5, dadurch gekennzeichnet, daß die Führungsnut (4) auf einer Seite, zwischen einem Steg (10) und den Gliedern (5,6,7) des Dichtkörpers, eine Sekundärdichtung ausbildet, stromauf derselben die Führungsnut (4) gegenüber den Gliedern auf eine Druckausgleichskammer räumlich erweitert ist, in die jedes Glied (z.B.6) mit mindestens einem Vorsprung, z.B. einer Noppe (11), hineinragt.

7. Absperrdichtung nach einem oder mehreren der Ansprüche 1 bis 6, dadurch gekennzeichnet, daß die Glieder (5,6,7) des Dichtkörpers an der Rückseite mit einem zusätzlichen Anfahr-Steuerdruck beaufschlagbar sind.

8. Absperrdichtung nach einem oder mehreren der Ansprüche 1 bis 6, dadurch gekennzeichnet, daß die Glieder (5,6,7) des Dichtkörpers in Außerbetriebsstellung der Dichtung rückseitig an einer sich am Grund der Führungsnut (4) abstützenden Wellfeder (W) aufsitzen.

9. Absperrdichtung nach einem oder mehreren der Ansprüche 1 bis 8, dadurch gekennzeichnet, daß die Glieder (5,6,7) des Dichtkörpers über das die Führungsnut (4) enthaltene Wandelement (1) mit dem Anfahrsteuerdruck und/oder einem Sperr-Kühlfluid beaufschlagbar sind.

10. Absperrdichtung nach einem oder mehreren der Ansprüche 1 bis 9, dadurch gekennzeichnet, daß die Führungsnut (4) zur Aufnahmne der Glieder (5,6,7) des Dichtkörpers zusammen mit Bohrungen bzw. Kammern und Leitungen (13,14;18,19) für die Zufuhr des Anfahrsteuerdrucks und/oder des Sperr-Kühlfluids in einem Dichtungsträger (3) des betreffenden Wandelements (1) angeordnet sind.

11. Absperrdichtung nach einem oder mehreren der Ansprüche 1 bis 10, dadurch gekennzeichnet, daß das eine Wandelement (1) eine mit einem Kühl-Sperrfluid beaufschlagte Kühlstruktur (21) aufweist, aus der der Primärdichtung bzw. den Kühlmittelführungen in den Gliedern Kühl- und Sperrfluid direkt zugeführt wird bzw. zuführbar ist.

12. Absperrdichtung nach einem oder mehreren der Ansprüche 1 bis 11, dadurch gekennzeichnet, daß die, eine Sekundärdichtung ausbildende Kontaktfläche am Steg (10) der Führungsnut (4) über den Dichtungsträger (3) am einen Wandelement (1) mit einem Sperr-Kühlfluid beaufschlagt ist, das über Leitungen (19) im Dichtungsträger (3) oder aus der Kühlstruktur (21) zugeführt wird.

13. Absperrdichtung nach einem oder mehreren der Ansprüche 1 bis 12, dadurch gekennzeichnet, daß die Kühlmittelführungen jedes Gliedes (z.B. 6) des Dichtkörpers enthalten: Eine in Längs- und Querrichtung sich erstreckende Verteilerkammer (16), mindestens einen seitlich von dieser abgewinkelten, in eine Stütznoppe (11) integrierten schachtartigen Zufuhrkanal (17) sowie Bohrungen (18), die die Verteilerkammer (16) mit der abgerundeten Berührungsfläche (D) an der Primärdichtung verbinden.

14. Absperrdichtung nach einem oder mehreren der Ansprüche 1 bis 7, sowie 9 bis 13, dadurch gekennzeichnet, daß die einzelnen Glieder (5,6,7) gegen die Rückstellkraft von Federn (15) über einen Differenzdruck in Richtung auf die betreffende andere Wand (2) verschiebbar sind.

15. Absperrdichtung nach einem oder mehreren der Ansprüche 1 bis 14, dadurch gekennzeichnet, daß sie als Doppeldichtung ausgebildet ist, mit neben- bzw. übereinander angeordneten Führungsnuten (4,4') für die Glieder der Dichtkörper in einem Dichtungsträger (3') des einen Wandelements (1), worin die Doppeldichtung aus einem gegenüber dem anderen Wandelement (2) und dem Dichtungsträger (3') eingeschlossenen Zwischenraum (26) mit einem Hochdruck-Sperrfluid versorgt und differenzdruck-betätigt ist, dessen Druck (P3) höher als der auf der einen oder auf der anderen Seite der Doppeldichtung und des einen Wandelements (1) in den voneinander getrennten Räumen (R1,R2) herrschenden Druck (P1,P2) ist.

16. Absperrdichtrung nach Anspruch 15, dadurch gekennzeichnet, daß die Führungsnuten (4,4') und die Glieder der Dichtkörper in Richtung auf die betreffende Gegenfläche des anderen Wandelements (2) zueinander geneigt sind.

17. Absperrdichtung nach einem oder mehreren der Ansprüche 1 bis 14, dadurch gekennzeichnet, daß die Führungsnut (4) an einem Dichtungsträger (3) ausgebildet ist, der zusammen mit der Führungsnut (4) und dem Dichtkörper gegenüber dem übrigen Verlauf des einen Wandelements (1) geneigt in Richtung auf das andere Wandelement (2) verläuft.

18. Absperrdichtung nach einem oder mehreren der Ansprüche 1 bis 17, dadurch gekennzeichnet, daß die einzelnen Glieder (5,6,7) eines Dichtkörpers aus einem hoch-temperaturbeständigen Leichtbaumaterial gefertigt sind, das im wesentlichen einen in sich geschlossenen porösen Körper ausbildet, der von der Verteilerkammer (16) aus in Richtung auf thermisch extrem belastete Bereiche, insbesondere in Richtung auf die abgerundete Berührungsfläche (D) hin, örtlich angepaßte Durchströmzonen extrem hoher Porosität für das zugeführte Kühl- und Sperrfluid ausbildet.

19. Absperrdichtung nach einem der Ansprüche 6 oder 12, dadurch gekennzeichnet, daß der Steg (10), als leistenartiges Führungsbauteil (10') aus einem hoch-temperaturbeständigen, metallisch porösen Leichtbaumaterial besteht und über das von einer Seite zugeführte Sperr-Kühlfluid eine in Richtung auf die betreffende Kontaktfläche abfließende Strömung ausbildet.

20. Absperrdichtung nach Anspruch 18 und 19, dadurch gekennzeichnet, daß die einzelnen Glieder (5,6,7) eines Dichtkörpers und/oder das leistenartige Führungsbauteil (10'') aus einem hohlkugelartigen, intermetallisch verbundenen, temperaturbestängigen Leichtbaumaterial gefertigt sind.

21. Absperrdichtung nach Anspruch 10, dadurch gekennzeichnet, daß innerhalb eines Dichtungsträgers (3) angeordnete Zuführmittel, z.B. Leitungen (19), Längsbohrung (18) oder -kammer, sowohl für die Zufuhr des Anfahrsteuerdrucks als auch für die Zufuhr des Kühl-- Sperrfluids in die Glieder (5,6,7) des Dichtkörpers ausgebildet und bezüglich der Leitungen (19) austrittsseitig derartig relativ zur Betriebs- und Außerbetriebsstellung, und damit zu den Positionen der schachtartigen Zufuhrkanäle (17) versetzt sind, daß erst nach Verstellung der Glieder in die Absperr- oder Betriebsstellung die Kühl-Sperrfluidzufuhr über dieselben Leitungen (19) in die Glieder (5,6,7) erfolgt.

## Claims

1. Sealing device between wall elements (1,2) which are arranged so as to be offset at an angle and movable relative to each other and which separate differently pressurised spaces (R1,R2) from each other, wherein the one wall element (1) has at least one guide groove (4) extending in the longitudinal direction of the seal, in which guide groove is movably arranged a sealing body which has a rounded contact surface (D) with which said sealing body forms the primary seal on an opposing surface of the other wall element (2), characterised in that
- the sealing body consists of assembled component parts (5,6,7),
- the component parts (5,6,7) engage in each other, in a manner such that they are three-dimensionally movable relative to each other, at points of articulation (9,8),
- the component parts (5,6,7) of the sealing body are held in a sealing position by a differential pressure prevailing at the seal.

2. Sealing device according to claim 1, characterised in that the component parts (5,6,7) of the sealing body each have respective guides for a coolant, which end at the rounded contact surface (D).

3. Sealing device according to claim 1 or 2, characterised in that the points of articulation are formed at sections (S,S') of the component parts (5,6), which sections overlap each other in the longitudinal direction of the sealing body and end in a substantially semicircular shaped manner.

4. Sealing device according to one of the claims 1 to 3, characterised in that the component parts (5,6) are each three-dimensionally movably coupled with one another at a point of articulation (9) by a sphere (K), with at least one of two surfaces (F) of the sections (S,S') which face each other at the sphere (K) being convex or shaped in the nature of a spherical surface.

5. Sealing device according to one or more of the claims 1 to 4, characterised in that the component parts (5,6,7) are movably supported in the guide groove (4) with local projections, in particular knobs (11) and guide webs (12).

6. Sealing device according to one or more of the claims 1 to 5, characterised in that the guide groove (4) forms a secondary seal on one side, between a web (10) and the component parts (5,6,7) of the sealing body, upstream of which same seal the guide groove (4) is three-dimensionally extended in respect of the component parts to a pressure equalising chamber into which every component part (e.g.6) projects with at least one projection, for example a knob (11).

7. Sealing device according to one or more of the claims 1 to 6, characterised in that an additional starting-control pressure can be applied to the rear side of the component parts (5,6,7) of the sealing body.

8. Sealing device according to one or more of the claims 1 to 6, characterised in that the component parts (5,6,7) of the sealing body in the no-operation setting of the seal rest with their reverse sides on an undulatory spring (W) which is supported at the base of the guide groove (4).

9. Sealing device according to one or more of the claims 1 to 8, characterised in that the starting-control pressure and/or a sealing-cooling fluid can be applied to the component parts (5,6,7) of the sealing body, via the wall element (1) which contains the guide groove (4).

10. Sealing device according to one or more of the claims 1 to 9, characterised in that the guide groove (4) for the incorporation of the component parts (5,6,7) of the sealing body, together with bores or chambers and lines (13,14;18,19) for the supply of the starting control pressure and/or the sealing-cooling fluid, is arranged in a seal carrier (3) of the respective wall element (1).

11. Sealing device according to one or more of the claims 1 to 10, characterised in that the one wall element (1) has a cooling structure (21) to which a cooling-sealing fluid is admitted and from which cooling and sealing fluid is supplied, or can be supplied, directly to the primary seal or the coolant guides in the component parts.

12. Sealing device according to one or more of the claims 1 to 11, characterised in that a sealing-cooling fluid which is supplied via lines (19) in the seal carrier (3) or from the cooling structure (21) is applied, via the seal carrier (3) at the one wall element (1), to the contact surface at the web (10) of the guide groove (4), which contact surface forms a secondary seal.

13. Sealing device according to one or more of the claims 1 to 12, characterised in that the coolant guides of each component part (e.g.6) of the sealing body contain: a distribution chamber (16) extending in a longitudinal and transverse direction, at least one shaft-like supply channel (17), which is offset at an angle at the side of the distribution chamber and is integrated into a support knob (11), and also bores (18), which connect the distribution chamber (16) with the rounded contact surface (D) at the primary seal.

14. Sealing device according to one or more of the claims 1 to 7, and also 9 to 13, characterised in that the individual component parts (5,6,7) can be displaced against the restoring force of springs (15) by way of a differential pressure in the direction of the respective other wall (2).

15. Sealing device according to one or more of the claims 1 to 14, characterised in that it is formed as a double seal, having guide grooves (4,4'), arranged next to or above each other, for the component parts of the sealing bodies in a seal carrier (3') of the one wall element (1), wherein the double seal is provided with a high-pressure sealing fluid from an interstice, (26) which is enclosed in respect of the other wall element (2) and the seal carrier (3'), and is operated by differential pressure, the pressure (P3) of the high-pressure sealing fluid being higher than the pressure (P1,P2) prevailing, on the one side or the other of the double seal and the one wall element (1), in the spaces (R1,R2) which are separated from each other.

16. Sealing device according to claim 15, characterised in that the guide grooves (4,4') and the component parts of the sealing bodies are inclined towards each other in the direction of the respective opposite surface of the other wall element (2).

17. Sealing device according to one or more of the claims 1 to 14, characterised in that the guide groove (4) is formed at a seal carrier (3) which, together with the guide groove (4) and the sealing body, extends so as to be inclined with respect to the rest of the remaining course of the one wall element (1) in the direction of the other wall element (2).

18. Sealing device according to one or more of the claims 1 to 17, characterised in that the individual component parts (5,6,7) of a sealing body are made of a lightweight material which is resistant to high temperatures and which substantially forms a self-contained porous body, which, from the distribution chamber (16) in the direction of thermally highly loaded areas, in particular in the direction of the rounded contact surface (D), forms locally adapted through-flow zones of extremely high porosity for the supplied cooling and sealing fluid.

19. Sealing device according to one of the claims 6 or 12, characterised in that the web (10), as a strip-like guide component (10'), consists of a metallically porous lightweight material resistant to high temperatures and forms, by way of the sealing-cooling fluid supplied from one side, a current flowing in the direction of the respective contact surface.

20. Sealing divice according to claim 18 and 19, characterised in that the individual component parts (5,6,7) of a sealing body and/or the strip-like guide component (10'') are made from an intermetallic material compound with a hollow-sphere-like, temperature resistant lightweight structure.

21. Sealing device according to claim 10, characterised in that supply means, for example lines (19), longitudinal bore (18) or longitudinal chamber, arranged within a seal carrier (3) are formed both for the supply of the starting-control pressure and for the supply of the cooling-sealing fluid to the component parts (5,6,7) of the sealing body and, with regard to the lines (19), are offset on the outlet side relative to the operation setting and the no-operation setting, and thus to the positions of the shaft-like supply channels (17), in such a way that only following the adjustment of the component parts into the sealing setting or the operation setting does the supply of cooling-sealing fluid take place via these same lines (19) into the component parts (5,6,7).

## Revendications

1. Joint d'étanchéité disposé entre deux éléments de paroi (1, 2) décalés angulairement et mobiles l'un par rapport à l'autre, pour séparer deux volumes (R1, R2) soumis à des pressions différentes, un élément de paroi (1) ayant au moins une rainure de guidage (4) s'étendant dans la direction longitudinale du joint, et qui reçoit de manière mobile le corps du joint, ce dernier ayant une surface de contact (D) arrondie par laquelle il forme le joint primaire contre la surface antagoniste de l'autre élément de paroi (2), caractérisé en ce que :
- le corps du joint est composé d'éléments (5, 6, 7),
- les éléments (5, 6, 7) viennent prendre les uns dans les autres de manière mobile dans l'espace au niveau de points d'articulation (8, 9),
- les éléments (5, 6, 7) du corps de joint sont maintenus en position d'étanchéité par la pression différentielle régnant au niveau du joint.

2. Joint d'étanchéité selon la revendication 1, caractérisé en ce que les éléments (5, 6, 7) du corps du joint ont chaque fois des moyens de guidage propres pour un agent de refroidissement et ces moyens de guidage se terminent au niveau de la surface de contact arrondie (D).

3. Joint d'étanchéité selon la revendication 1 ou 2, caractérisé en ce que les points d'articulation sont réalisés sur les segments (S, S') d'extrémité, de forme sensiblement semi-circulaire des éléments (5, 6) qui se chevauchent dans la direction longitudinale du corps du joint.

4. Joint d'étanchéité selon l'une des revendications 1 à 3, caractérisé en ce que les éléments (5, 6) sont couplés l'un à l'autre au niveau d'un point d'articulation (9) par une bille (K) permettant une mobilité dans l'espace, et au moins une surface (F) des segments (S, S') en regard au niveau de la bille (K), de forme bombée ou en forme de surface de sphère.

5. Joint d'étanchéité selon l'une ou plusieurs des revendications 1 à 4, caractérisé en ce que les éléments (5, 6, 7) comportent des saillies locales notamment des bossages (11) et des branches de guidage (12) qui les appuient de manière mobile dans la rainure de guidage (4).

6. Joint d'étanchéité selon une ou plusieurs des revendications 1 à 5, caractérisé en ce que la rainure de guidage (4) est réalisée d'un côté entre une branche (10) et les éléments (5, 6, 7) du corps du joint en formant un joint secondaire, et en aval de celui-ci, la rainure de guidage (4) est élargie dans l'espace par rapport aux éléments en formant une chambre de compensation de pression dans laquelle pénètre chaque élément par exemple l'élément (6) avec au moins une partie en saillie par exemple un bossage (11).

7. Joint d'étanchéité selon une ou plusieurs des revendications 1 à 6, caractérisé en ce que les éléments (5, 6, 7) du joint d'étanchéité sont sollicités au niveau de leur face arrière par une pression de commande de démarrage supplémentaire.

8. Joint d'étanchéité selon une ou plusieurs des revendications 1 à 6, caractérisé en ce que les éléments (5, 6, 7) du corps du joint s'appuient en position de repos du joint, par leur côté arrière contre un ressort ondulé (W) s'appuyant lui-même contre le fond de la rainure de guidage (4).

9. Joint d'étanchéité selon une ou plusieurs des revendications 1 à 8, caractérisé en ce que les éléments (5, 6, 7) du corps du joint sont sollicités par l'intermédiaire de l'élément de paroi comportant la rainure de guidage (4), par la pression de commande de démarrage et/ou par un fluide de refroidissement et d'arrêt.

10. Joint d'étanchéité selon une ou plusieurs des revendications 1 à 9, caractérisé en ce que la rainure de guidage (4) peut recevoir les éléments (5, 6, 7) du corps du joint ainsi que les perçages et les chambres et les conduits (13, 14, ; 18, 19) pour l'alimentation en fluide fournissant la pression de commande de démarrage et/ou de fluide d'arrêt de refroidissement sont prévus dans un support de joint (3) de l'élément de paroi (1) correspondant.

11. Joint d'étanchéité selon une ou plusieurs des revendications 1 à 10, caractérisé en ce qu'un élément de paroi (1) présente une structure de refroidissement (19) sollicitée par le fluide d'étanchéité et de refroidissement à partir de laquelle est amené directement du fluide d'étanchéité et de refroidissement à l'étanchéité primaire ou au guide de fluide de refroidissement dans les éléments, ou peut en fournir.

12. Joint d'étanchéité selon une ou plusieurs des revendications 1 à 11, caractérisé en ce que la surface de contact formant un joint secondaire sur la branche (10) de la rainure de guidage (4) est sollicitée par l'intermédiaire du support de joint (3) au niveau de l'élément de paroi (1) par un fluide d'étanchéité et de refroidissement arrivant par des conduites (19) du support de joint (3) et de la structure de refroidissement (19).

13. Joint d'étanchéité selon une ou plusieurs des revendications 1 à 12, caractérisé en ce que les conduites de fluide de refroidissement de chaque élément (par exemple 6) du corps du joint comprennent : une chambre de distribution (16) s'étendant longitudinalement et transversalement, au moins un canal de guidage (17) en forme de sas, intégré dans un bossage d'appui (11) en étant coudé latéralement, ainsi que des perçages (18) qui relient la chambre distributrice (16) aux surfaces de contact arrondies (D) au niveau du joint primaire.

14. Joint d'étanchéité selon une ou plusieurs des revendications 1 à 7 et 9 à 13, caractérisé en ce que les différents éléments (5, 6, 7) peuvent être déplacés contre la force de rappel de ressort (15) par la pression différentielle en direction de l'autre paroi (2) correspondant.

15. Joint d'étanchéité selon une ou plusieurs des revendications 1 à 14, caractérisé en ce que le joint est double avec des rainures de guidage (4, 4') juxtaposées ou superposées pour les éléments du corps du joint dans un support de joint (3') d'un élément de paroi (1), le double joint étant alimenté en fluide d'étanchéité à haute pression à partir d'un volume intermédiaire (26) compris entre l'élément de paroi (2) et le support de joint (3') en étant commandé par la différence de pression, la pression (P3) de ce volume étant supérieure à celle régnant de l'un ou de l'autre côté du double joint et de la pression (P1, P2) régnant dans les volumes (R1, R2) séparés l'un de l'autre par l'élément de paroi (1).

16. Joint d'étanchéité selon la revendication 15, caractérisé en ce que les rainures de guidage (4, 4') et les éléments du corps de joint sont inclinés l'un par rapport à l'autre en direction de la surface antagoniste correspondant de l'autre élément de paroi (2).

17. Joint d'étanchéité selon une ou plusieurs des revendications 1 à 14, caractérisé en ce que la rainure de guidage (4) est réalisée sur un support de joint (3) qui est incliné en direction de l'autre élément de paroi (2) avec la rainure de guidage (4) et le corps de joint par rapport au tracé restant de l'autre élément de paroi (1).

18. Joint d'étanchéité selon une ou plusieurs des revendications 1 à 17, caractérisé en ce que les différents éléments (5, 6, 7) d'un corps de joint sont fabriqués en une matière légère très réfractaire qui forme essentiellement un corps poreux fermé sur lui-même, et constitue à partir de la chambre de distribution (16), en direction des zones sollicitées de manière extrême sur le plan thermique, notamment en direction de la surface de contact arrondie (D), des zones de passage adaptées localement, ayant une porosité extrêmement élevée pour l'alimentation en fluide de refroidissement et d'étanchéité.

19. Joint d'étanchéité selon une ou plusieurs des revendications 6 ou 12, caractérisé en ce que la branche (10) est une pièce de guidage (10') en forme de languette en un matériau léger, métallique poreux très réfractaire, et le fluide d'étanchéité de refroidissement fourni d'un côté développe en direction de la surface de contact concerné un écoulement de sortie.

20. Joint d'étanchéité selon les revendications 18 et 19, caractérisé en ce que les différents éléments (5, 6, 7) d'un corps de joint et/ou la pièce de guidage (10'') en forme de languette sont réalisés en un matériau léger, réfractaire, en forme de bille creuse à liaison intermétallique.

21. Joint d'étanchéité selon la revendication 10, caractérisé en ce que les moyens d'alimentation prévus à l'intérieur d'un support de joint (3) par exemple les conduites (19), le perçage longitudinal (18) ou la chambre sont conçus à la fois pour fournir la pression de commande de démarrage et pour assurer l'alimentation en fluide de refroidissement et d'étanchéité pour les éléments (5, 6, 7) du corps de joint et les moyens d'alimentation pour les conduites (19), en sortie, sont décalés par rapport à la position de fonctionnement et la sont décalés position de repos et ainsi par rapport aux positions des canaux d'alimentation (17) en forme de sas de façon qu'après le déplacement des éléments en position d'étanchéité ou position de fonctionnement, l'alimentation en fluide de refroidissement et d'étanchéité se fait par les mêmes conduites (19) pour ces éléments (5, 6, 7).
